# EUROPÄISCHE PATENTSCHRIFT

(11) **EP 1 192 477 B1**
(45) Veröffentlichungstag und Bekanntmachung des Hinweises auf die Patenterteilung: **27.04.2005**
(21) Anmeldenummer: 00931181.2
(22) Anmeldetag: 10.05.2000
(51) Int. Cl.: G01S 5/00

(54) **VERFAHREN ZUR ERZEUGUNG EINES HOCHFREQUENZSIGNALES UND VORRICHTUNG ZUM EMPFANG DIESES HOCHFREQUENZSIGNALES**
METHOD FOR GENERATING A HIGH FREQUENCY SIGNAL AND METHOD FOR RECEIVING SAID HIGH FREQUENCY SIGNAL
PROCEDE POUR LA GENERATION D'UN SIGNAL HAUTE FREQUENCE ET DISPOSITIF DE RECEPTION DE CE SIGNAL HAUTE FREQUENCE

(30) Priorität: 10.05.1999 DE 19921372
(43) Veröffentlichungstag der Anmeldung: 03.04.2002
(73) Patentinhaber: Schäfer, Wolfgang, 71254 Ditzingen (DE)
(72) Erfinder: Schäfer, Wolfgang, 71254 Ditzingen (DE)
(74) Vertreter: Gleiss & Grosse
(86) Internationale Anmeldenummer: PCT/EP2000/004236
(87) Internationale Veröffentlichungsnummer: WO 2000/068704

(56) Entgegenhaltungen:
- DE-A- 19 742 100
- US-A- 4 894 662
- US-A- 4 953 178
- US-A- 5 603 091

## Beschreibung

Bei der Übertragung von Zeitinformation mittels hochfrequenten Signalen sind zwei sich teilweise widersprechende Aufgaben zu erfüllen, nämlich hohe Auflösung einerseits und Eindeutigkeit der Messung andererseits. Zur Erzielung einer hohen Auflösung sind hohe Modulationsraten erforderlich, während zur Erzielung einer eindeutigen Messung niederfrequente Modulationssignale erforderlich sind.

Die in der Satellitentechnik verwendeten Zeit-Transfer und Ranging-Signale, welche auf Pseudo-Noise kodierten Signalen basieren, erfüllen diese Anforderungen zwar weitgehend. Allerdings werden bei erhöhten Genauigkeitsforderungen sehr hohe Modulationsraten verbunden mit hoher Bandbreite erforderlich. Da solche Signale einen gegenüber normalen Kommunikationssignalen auf Saiellitenfunkstrecken einen sehr hohen Bandbreitenbedarf haben, wird deren Signalbandbreite normalerweise beschränkt, was mit wiederum der Forderung nach hoher Auflösung widerspricht.

Die Druckschrift US 4,953,178 offenbart ein Kommunikationssystem zum Senden und Empfangen eines Signals mit einem weiten Spektrum durch eine sendeseitige Modulationseinheit und eine empfangsseitige Demodulationseinheit. Ein erster Träger wird in einem ersten Verfahrensschritt mit Daten moduliert. Zu diesem modulierten Signal wird ein zweiter Träger addiert. Das zusammengesetzte Signal aus dem modulierten ersten Träger und dem zweiten unmodulierten Träger wird zusammen mit einem Pseudo-NoiseCodeSignal moduliert oder gespreizt.

Die Druckschrift US 5,603,091 beschreibt ein Paging-System.

Das der Erfindung zugrundeliegende Verfahren kombiniert die Forderung nach hoher Auflösung bei gleichzeitig eindeutiger Messung so, dass beinahe beliebig hohe Auflösungen ohne zusätzlichen Bandbreitenbedarf oder Bedarf an zusätzlicher Sendeleistung erzielbar sind. Diese Signale finden besonders dort Anwendung, wo die genutzte Transponderbandbreite von Satellitenfunkverbindungen minimiert werden muss.

Das hochfrequente Signal wird so erzeugt, dass im Wesentlichen zwei Informationen enthalten sind:
1. Der modulierende 'Ton', welcher in der Frequenzdifferenz zwischen oberem und unterem Seitenband enthalten ist und
2. Die in den Seitenbändern enthaltene Modulation an sich.

Charakteristisch ist das resultierende Spektrum. Bei der Modulation wird der ursprüngliche Träger unterdrückt. Es entstehen zwei wohl unterscheidbare, diskrete Seitenbänder, die einen festen Frequenzabstand aufweisen. Diese Seitenbänder sind wiederum so moduliert, daß deren Einzelträger mit einem Spreiz-Code verwischt werden. Dabei wird die Modulationsrate des Spreiz-Codes klein gegenüber der Frequenz des modulierenden Tones gewählt. Die Bandbreite der Seitenbänder ist klein gegenüber deren Frequenzabstand untereinander. Der zur Spreizung verwendete Code weist Korrelationseigenschaften auf, die eine eindeutige Bestimmung der Phasenlage in der Empfangseinrichtung erlauben.

Anhand der Phasenlage dieser beiden Informationen, die die Empfangeinrichtung regeneriert und auswerted, wird die Gruppenlaufzeit aus modulierendem Ton und Spreiz-Code bestimmt. Die Mehrdeutigkeit des Meßergebnisses aus der Messung des Tones wird anhand der in den Seitenbändern enthaltenen Modulation geringer Taktrate aufgelöst.

Das Verfahren eignet sich insbesondere zur Laufzeitmessung eines hochfrequenten Signales zwischen Sende- und Empfangseinrichtung.

Das resultierende Meßergebnis dieses Verfahrens ist besonders genau, da die Höhe der Tonfrequenz, die für die Auflösung bestimmend ist, in weiten Grenzen fast beliebig hoch gewählt werden kann. Für die Bestimmmung der Eindeutigkeit der Tonmessung reicht eine relativ niedrige Rate des Spreiz-Codes aus.

Die Empfangseinrichtung verarbeitet mit zwei Empfangskanälen in den Vorstufen beide Seitenbänder separat. Beide Kanäle sind zur Erhöhung der Störfestigkeit schmalbandig ausgelegt.

Die Regenerierung der Tonfrequenz geschieht duch Differenzbildung zwischen beiden Empfangskanälen and anschließender Halbierung der entstehenden Schwebungsfrequenz.

Das Verfahren weist folgende wesentliche Neuerungen auf:
1. Gegenüber traditionellen Verfahren der Gruppenlaufzeitmessung anhand modulierter Hochfrequenzsignale kann bei diesem Verfahren die Auflösung durch Erhöhung der Tonfrequenz praktisch beliebig gesteigert werden, ohne jedoch die effektiv benutzte spektrale Bandbreite zu vergrößern.
2. Die benötigte Sendeleistung ist unabhängig von der gewählten modulierenden Tonfrequenz.
3. Die Genauigkeit kann unabhängig von der Sendeleistung gesteigert werden.
4. Die naturgemäß bei der Tonmessung entstehende Mehrdeutigkeit wird durch die simultane Modulation mit einem Spreiz-Code niedriger Rate aufgelöst.
5. Die Empfangseinrichtung weist zwei schmalbandige Kanäle auf, sodaß fremde Signale zwischen beiden Seitenbändern und außerhalb davon nur geringe Störwirkung besitzen.
6. Die Bandbreite der beiden Empfangskanäle und damit deren Empfindlichkeit ist unabhängig von der gewählten Tonfrequenz.

Aufgabe der Erfindung ist daher ein Verfahren zur Erzeugung eines geeigneten Hochfrequenzsignales und eine Vorrichtung zum Empfang desselben.

Diese Aufgabe wird mit einem Verfahren des Anspruchs 1 gelöst.

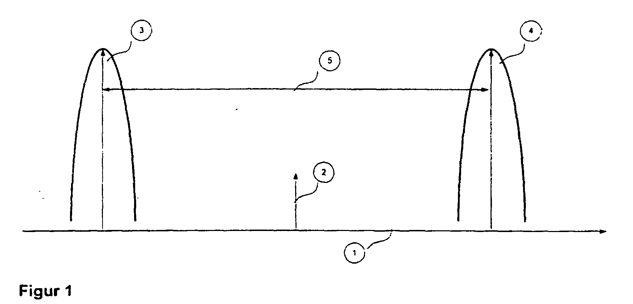

Die Erfindung wird mit Bezug auf Figur 1 näher beschrieben. Es wird das resultierende Spektrum des hochfrequenten Signales über der Frequenzachse (1) gezeigt. Es.besteht aus zwei symmetrisch zum unterdrückten Träger (2) liegenden Seitenbändern (3 und 4). Die spektrale Bandbreite der Seitenbänder, die durch zusätzliche Modulation mit einem Spreiz-Code niedriger Rate entsteht, ist klein gegenüber dem Frequenzabstand (5) zwischen dem unteren (3) und oberen (4) Seitenband.

## Patentansprüche

1. Verfahren zur Übertragung eines Zeitsignals mittels eines Hochfrequenzsignals, das Zeitinformation enthält, wobei Übertragung die Erzeugung, die Aussendung und das Empfangen des Hochfrequenzsignals umfasst, **gekennzeichnet durch** die Schritte:
- Erzeugung des Hochfrequenzsignals, wobei
a) zur Erzeugung des Hochfrequenzsignals ein hochfrequenter Träger (2) mit einem weiteren Träger, genannt Ton, so moduliert wird, dass zwei symmetrische Seitenbänder, genannt unteres und oberes Seitenband (3,4), entstehen,
b) die Seitenbänder so moduliert sind, dass deren Einzelträger mit Spreizcodes verwischt werden,
c) die Taktrate der zur Spreizung verwendeten Spreizcodes klein gegenüber dem Frequenzabstand (5) von oberem (4) und unterem (3) Seitenband ist,
d) das resultierende hochfrequente Signal aus zwei diskreten Seitenbändem besteht, deren Einzelbandbreiten gegenüber dem Frequenzabstand zwischen unterem und oberem Seitenband klein ist,
e) der hochfrequente Träger auf der Mittelfrequenz des Signals unterdrückt ist,
- Aussendung des Hochfrequenzsignals,
- Empfangen des Hochfrequenzsignals, wobei
f) aus dem unteren und oberen Seitenband der ursprünglich aufmodulierte Ton regeneriert wird,
g) die Phasenlage des regenerierten Tons bestimmt wird,

2. Verfahren nach Anspruch 1, **dadurch gekennzeichnet, daß** das Hochfrequenzsignal, das Zeitinformationen enthält, zu einem Zwei-Weg Zeittransfer benutzt wird.

3. Verfahren nach Anspruch 1, **dadurch gekennzeichnet, daß** das Hochfrequenzsignal, das Zeitinformationen enthält, zu einem Zwei-Weg Frequenztransfer benutzt wird.

4. Verfahren nach Anspruch 1, **dadurch gekennzeichnet, daß** das Hochfrequenzsignal, das Zeitinformationen enthält, zu einer Ein-Weg Zeitsynchronisation benutzt wird.

5. Verfahren nach Anspruch 1, **dadurch gekennzeichnet, daß** das Hochfrequenzsignal, das Zeitinformationen enthält, zu einer Zwei-Weg Zeitsynchronisation benutzt wird.

6. Verfahren nach einem der vorstehenden Ansprüche, **dadurch gekennzeichnet, dass** zusätzlich zur Zeit- oder Frequenzinformation Daten übertragen werden.

7. Verfahren nach einem der vorhergehenden Ansprüche, **dadurch gekennzeichnet, dass** die Gruppenlaufzeit im Übertragungskanal gemessen wird.

## Claims

1. Method for transfering a time signal by means of a high frequency signal containing time information, wherein the transfer comprises the generation, the transmission and the reception of said high frequency signal, **characterized by** the following steps:
― generation of the high frequency signal, wherein
a) to generate the high frequency signal, a high frequency carrier (2) is modulated by means of an additional carrier, refered to as tone, such that two symmetrical sidebands, refered to as lower and upper sidebands (3, 4), are formed;
b) the sidebands are modulated such that their individual carriers are blurred with spreading codes;
c) the clock rate of the spreading code used for spreading is low as compared with the frequency distance (5) from the upper (4) and the lower (3) sidebands;
d) the resulting high frequency signal consists of two discrete sidebands, the individual bandwidths of which are small as compared to the frequency distance between the lower and upper sidebands;
e) the high frequency carrier using the medium frequency of the signal is suppressed;
― transmission of the high frequency signal;
― reception of the high frequency signal, wherein
f) the originally modulated tone is regenerated from the lower and upper sidebands;
g) the phase position of the regenerated tone is determined.

2. Method according to Claim 1, **characterized in that** the high frequency signal containing time information is used for two-way time transfer.

3. Method according to Claim 1, **characterized in that** the high frequency signal containing time information is used for two-way frequency transfer.

4. Method according to Claim 1, **characterized in that** the high frequency signal containing time information is used for one-way time synchronization.

5. Method according to Claim 1, **characterized in that** the high frequency signal containing time information is used for two-way time synchronization.

6. Method according to any one of the preceding claims, **characterized in that** data is transfered in addition to the time or frequency information.

7. Method according to any one of the preceding claims, **characterized in that** the group delay time is measured in the transfer channel.

## Revendications

1. Procédé de transmission d'un signal temporel au moyen d'un signal haute fréquence qui contient une information temporelle, la transmission comprenant la génération, l'émission et la réception du signal haute fréquence, **caractérisé par** les étapes suivantes:
- génération du signal haute fréquence,
a) un support haute fréquence (2) étant, pour la production du signal haute fréquence, modulé avec un autre support, appelé son, de manière telle que deux bandes latérales symétriques, appelées bandes latérales inférieure et supérieure (3, 4), se forment,
b) les bandes latérales étant modulées de manière telle que leurs supports individuels sont effacés avec des codes d'étalement,
c) le débit du rythme des codes d'étalement utilisés pour l'étalement étant petit par rapport à l'écart de fréquence (5) entre les bandes latérales supérieure (4) et inférieure (3),
d) le signal haute fréquence résultant étant composé de deux bandes latérales discrètes dont les largeurs de bande individuelles sont petites par rapport à l'écart de fréquence entre les bandes latérales inférieure et supérieure,
e) le support haute fréquence étant affaibli à la fréquence moyenne du signal,
- émission du signal haute fréquence,
- réception du signal haute fréquence,
f) le son au départ superposé par modulation étant régénéré à partir des bandes latérales inférieure et supérieure,
g) la relation de phase du son régénéré étant déterminée.

2. Procédé selon la revendication 1, **caractérisé en ce que** le signal haute fréquence qui contient des informations temporelles est utilisé pour un transfert temporel bidirectionnel.

3. Procédé selon la revendication 1, **caractérisé en ce que** le signal haute fréquence qui contient des informations temporelles est utilisé pour un transfert de fréquence bidirectionnel.

4. Procédé selon la revendication 1, **caractérisé en ce que** le signal haute fréquence qui contient des informations temporelles est utilisé pour une synchronisation temporelle unidirectionnelle.

5. Procédé selon la revendication 1, **caractérisé en ce que** le signal haute fréquence qui contient des informations temporelles est utilisé pour une synchronisation temporelle bidirectionnelle.

6. Procédé selon l'une des revendications précédentes, **caractérisé en ce que** des données sont transmises en plus de l'information temporelle ou de fréquence.

7. Procédé selon l'une des revendications précédentes, **caractérisé en ce que** la durée de propagation de groupe est mesurée dans le canal de transmission.
